# EUROPEAN PATENT APPLICATION

(11) **EP 1 944 704 A1**
(43) Date of publication of application: **16.07.2008**
(21) Application number: 07253136.1
(22) Date of filing: 10.08.2007
(51) Int. Cl.: G06F 17/30, H04N 1/00

(54) **Document management system**

(30) Priority: 05.01.2007 US 650917
(71) Applicant: Sanford, L. P., Oak Brook, Illinois 60523 (US)
(72) Inventor: Petty, Jeremy, Garland TX 75043 (US)
(74) Representative: Style, Kelda Camilla Karen

(57) **Abstract**

A document management system comprises a first functionality operable to cause a first file to be created, a second functionality operable to cause an image to be printed comprising identification information, and a third functionality operable to cause a link to be created to said file, said link arranged to link the identification information to said first file.

## Description

### FIELD OF THE INVENTION

The present invention relates to a method for management of documents as well as to a system for document management.

### BACKGROUND OF THE INVENTION

A number of different document management systems are known. For example, US Patent Application Publication number US 2006/0190400 discloses a document management system. This provides a document reservation process which allows the input of the document title, billing code and page numbers. The system is such that a barcode is printed and applied to the paper document. This barcode has a value which corresponds to the reservation. If there is a correspondence between the barcode and the reservation, a PDF (Portable Document Format (Adobe Acrobat)) file is created. The process involves determining if the page count created in the file reservation matches the actual pages of the image file. If so, the scanned image is stored.

US 6,744,936 describes an apparatus and method for simultaneous management of paper based documents and digital images of those documents. The user creates an entry in a digital filing system that provides an electronic link to the digital image of the paper based document and at the same time information as to the location of the paper based document in a file store.

The known document management systems typically use a database such as a SQL (Structured Query Language) database to store document reservation information. This means that a special SQL database needs to be created, using up unnecessary resources.

A further problem is that the Windows system provided by Microsoft is used by a high percentage of all personal computer users. The interface provided by known document management systems is not particularly intuitive to the user familiar with the Windows operating system, because of the proprietary way that the underlying document management system works. Thus, the usability of such document management systems may be poor.

Another problem with some systems is that a user may intend to scan a set of documents. However the user may not be able to determine if all of the documents which are to be scanned have been scanned.

Another problem with some known document imaging systems is that they separately store the documents in a different location to the existing electronic documents. Further some known document imaging systems require a dedicated scanner.

A number of know systems are post indexing systems. Post indexing systems are such that the documents are scanned. A user then has to go through the scanned documents, renaming the documents and selecting a desire storage location.

It is an aim of one or more embodiments of the present invention to address or at least mitigate one or more of the problems described above.

### SUMMARY OF THE INVENTION

According to one aspect, there is provided a document management system comprising: a first functionality operable to cause a first file to be created; a second functionality operable to cause an image to be printed comprising identification information; a third functionality operable to cause a link to be created to said file, said link arranged to link the identification information to said first file.

According to another aspect, there is provided a system comprising: document management system comprising: a first functionality operable to cause a first file to be created; a second functionality operable to cause an image to be printed comprising document identification information; and a third functionality operable to cause a shortcut to be created to said file, said shortcut arranged to link the document identification information to said first file; and a printer operable to print said image.

According to another aspect, there is provided a document management system comprising: means for creating a first file; means for causing an image to be printed, said image comprising identification information; and means for creating a link to said file, said link arranged to link the identification information to said first file.

According to another aspect, there is provided a method of document management comprising: creating a first file; printing an image comprising identification information; and creating a link to said file, said link arranged to link the identification information to said first file.

According to another aspect, there is provided a computer readable medium having computer executable components comprising: a first functionality operable to cause a first file to be created; a second functionality operable to cause an image to be printed comprising identification information; a third functionality operable to cause a link to be created to said file, said link arranged to link the identification information to said first file.

### BRIEF DESCRIPTION OF DRAWINGS

For a better understanding of the present invention and as to how the same may be carried into effect, reference will now be made by way of example only to the accompanying drawings in which:
Figure 1 shows a flow diagram of the reservation procedure;
Figure 2 shows a flow diagram of the scanning procedure;
Figure 3 shows a system for implementing embodiments of the present invention;
Figure 4 schematically shows the relationship between the files/folders; and
Figure 5 shows a view of an interface displayed.

### DETAILED DESCRIPTION OF EMBODIMENTS OF THE PRESENT INVENTION

Embodiments of the present invention provide apparatus, a method, and a computer program for document management. Embodiments of the invention also extend to the provision of a computer program carrying medium carrying a program embodying the present invention.

Embodiments of the present invention allow a document to be scanned and stored in a desired location on a computer and/or network. In embodiments of the present invention, the scanned image can be stored in a file and/or folder. Embodiments of the present invention have a document reservation system, which will be described in more detailed hereinafter, which allows a user to identify a file folder in which the paper document, which has yet to be scanned, is to be stored. Preferred embodiments of the present invention are used in the context of a system which uses Windows Explorer provided by Microsoft. It should be appreciated that embodiments of the present invention can be used with other version of the software provided by Microsoft. Embodiments of the present invention are not limited to the application of the invention in an environment using Microsoft software. Alternative embodiments of the present invention may be used with different software provided by different software providers.

In preferred embodiments of the present invention, users are able to identify the Windows file folder in which the paper document is to be stored. The interface is based on the Windows Explorer style. Embodiments of the present invention allow the user to name the document, associate keywords to identity the document, and pre-assign the document format in which they want their scan paper document to be in. Examples of document formats include, by way of example only, Word, PDF, Excel, html (Hyper Text Markup Language) or the like.

Embodiments of the present invention comprise an application. The application is a computer program which may be provided on a computer readable medium. The application will run on a computer, server or the like. The application when run provides a plurality of functionalities.

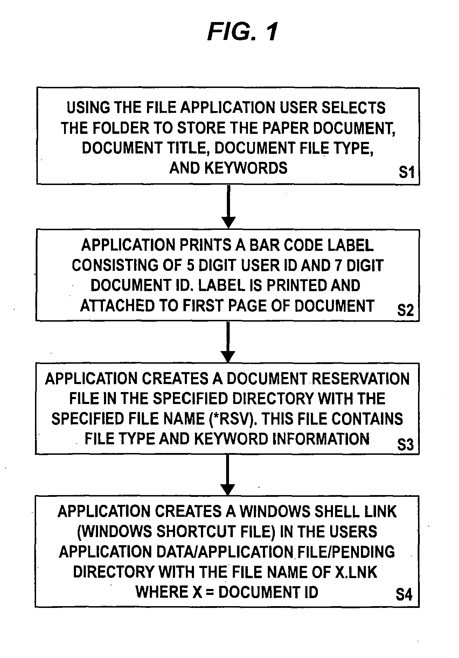

Reference is now made to Figure 1 which illustrates the reservation procedure.

The application is started, for example by clicking on an associated icon or in any other suitable way.

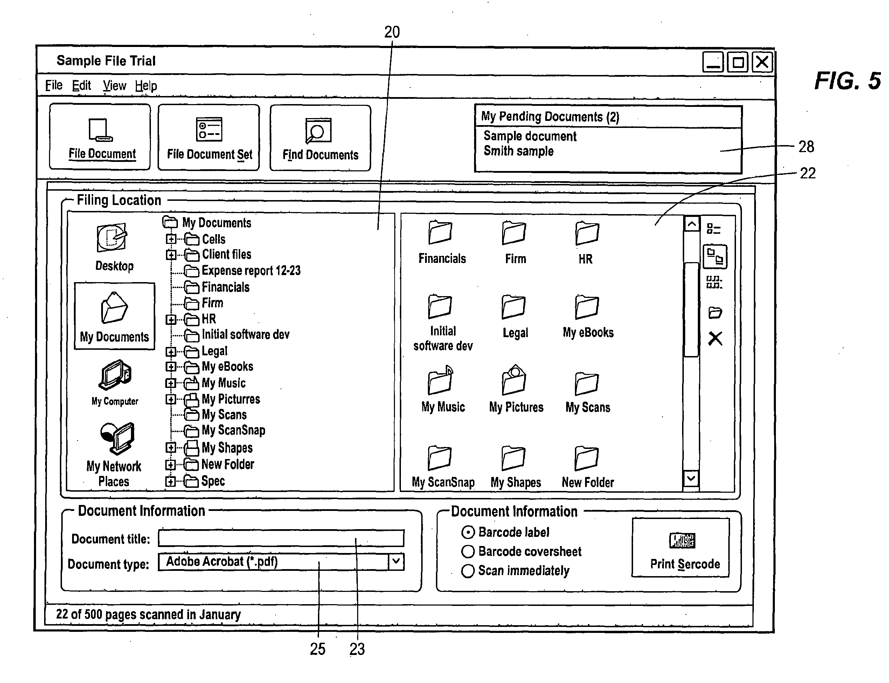

In Step S1, the user uses the application to select the folder in which the scanned document is to be stored. The user is able to do this by going to the location where the document is to be stored by using the familiar tree structure for storage locations on the computer or network. In this regard, reference is made to Figure 5 which shows a first interface provided by the application embodying the present invention. This interface is displayed on a display. As can be seen from box 20 of the interface, the usual Windows tree structure for files is displayed. The user selects the file location or creates a file location in which the document is to be stored. This is done using the window's functionality by moving the cursor to highlight the desired location. For example, in box 20, the user has highlighted the folder "my documents". The folders included in "my documents" are displayed in box 22.

In step S1, the title for the document is selected by entering the information into box 23. This will be the title of the document to be stored.

In Step S1, in addition to selecting the folder and the title, the user also selects the document file type. The document file type, as mentioned above can take any suitable format such as Word, PDF, Excel or the like. In preferred embodiments of the invention, the interface of Figure 5 has a box 25 in which the file type can be inserted or selected from a drop down menu. Optionally, keywords can be associated with the file, for example to assist in indexing or searching.

In Step S2, the application causes a barcode label to be printed. The barcode consists of two pieces of information. The first part of the information comprises user identity information. In one embodiment of the present invention, the user identity comprises a five-digit number. It should be appreciated that larger or smaller user identities can be used. The user identity can take any suitable format. In one embodiment, the user identity will identify the computer creating the barcode. In the alternative, the user identity will identify the computer or server location where the scanned document is to be stored.

The second part of the information provided by the barcode, is a document identity number. Each document will have a unique identity number. In one embodiment of the present invention, the document identity comprises a seven-digit number. It should be appreciated that in an alternative embodiment of the present invention, the number may be bigger or smaller than this. In alternative embodiments of the present invention, the identity may not be solely a number but may take any suitable format. Of course the user identity and document number may be any order. In some embodiments of the invention, additional information may also be provided.

In Step S2, the label is printed and is attached to the first page of the document. In one alternative embodiment, a cover sheet is printed with a barcode on it. This cover sheet will then become the first page of the document to be scanned. The label or the like may be automatically printed when step S1 is completed or in the alternative may require some action from the user in order to print the label.

In one embodiment of the invention, the information encoded in the bar code is printed adjacent the bar code so that it can be read by the user.

In Step S3, the application creates a document reservation file in the specified folder location identified in the Step S1. This file is called "document title" .rsv. The document title is that input in Step S1. This .rsv file is a text file, in one preferred embodiment of the present invention. In alternative embodiments of the present invention, the .rsv file is in any other suitable format. This .rsv file contains the file type and keyword information input in Step S1.

It should be appreciated that in alternative embodiments of the present invention, Steps S2 and S3 may be carried out more or less at the same time or in the alternative, Step S3 may be carried out before Step S2.

In Step S4, the application creates a windows shell link. This is the Windows short cut file in the user's application data/application file/pending directory. In other words, the shell link is created in a folder which exists for the application. The name of the shortcut link is X.Ink where X is the document identity number, as discussed in Step S2. The short cut link can be stored in any other suitable location in alternative embodiments of the invention. The short cut link is to create a link between the document identity number and the .rsv file.

In a non Windows system, a link is created which has the document identity number as its name and which links the document identity to the associated reservation file. The link provides a pointer to the location in which the reservation file is stored.

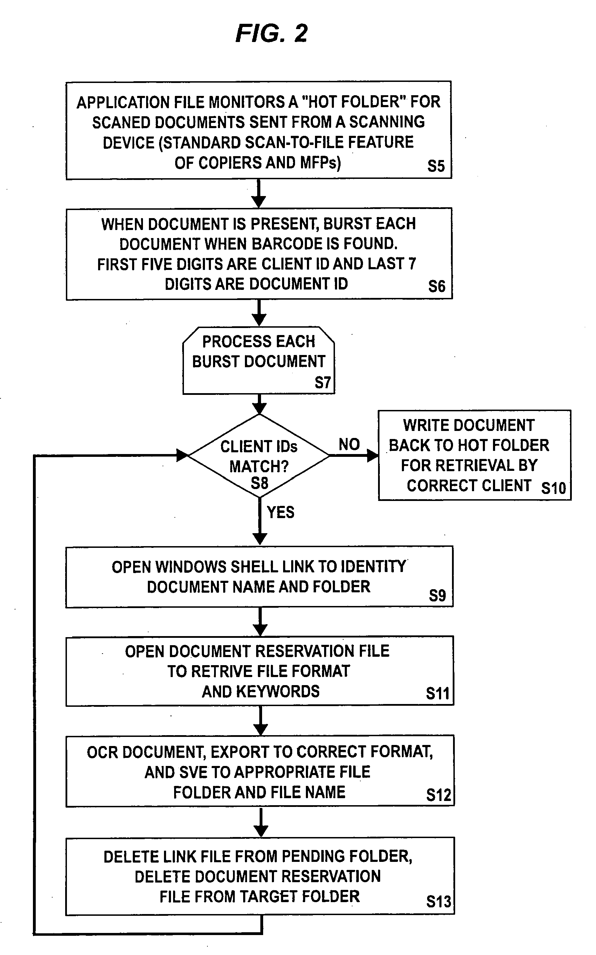

Reference is now made to Figure 2 which shows the steps taken when a document is scanned. The next step is S5. When a document is scanned, the first sheet of the document to be scanned has the barcode of Step S2. As mentioned, this is provided by a label which is affixed to the first sheet of a document or by a cover sheet having been printed with a barcode. The system has a dedicated location such as a "hot folder". Effectively, when a document is scanned, the document is first sent to the dedicated location. This is a well known standard scan-to-file feature of copiers and multi-function printers. The application will periodically check this dedicated location for scanned documents.

In Step S6, when the application determines that a document is present, the application bursts, or separates, each document when the barcode is found. In other words, the application software will look at each page which has been scanned to identify those pages on which a barcode is found. When a barcode is identified, that is used to determine the beginning of a document. If no other barcode is found, then the entire scanned document is identified as being a single document. If on the other hand, one or more additional barcodes are identified, then it is determined that the document relates to more than one scanned document. The last page of a given document is considered to be the page immediately preceding the next barcode.

Additionally, the barcode is looked at by the application and the application identifies the information provided by the barcode, that is the user identity and the document identity.

In Step S7, the documents are burst.

In Step S8, the user identity is looked at. If the user identity matches in other words, the application software on the computer identifies that the user identity matches that of the computer on which the application software is installed or a location to which the application has access, then the next step is Step S9. If, on the other hand, there is no match of the user identity, then the next step is Step S10. In this way, a number of different users can look at the scanned documents in a given location and only remove those documents intended for that user.

In Step S10, the document is written back to the dedicated location for retrieval by the correct client or user.

Going back to Step S9, the document identity is used to open the windows shell link. In other words, the document identity causes the associated shell link to be identified which is then opened. This shell link identifies the location of the reservation file. In other words, the window shell link references the reservation file in that it identifies the document name and folder where the reservation file is stored.

The next step is Step S11 in which the document reservation file is opened to retrieve the file format information and the keywords.

In Step S12, the document is processed in order to make sure it is in the correct file format. This may require an optical character recognition OCR process to be carried out on the document. Once the document is in the correct format, it is saved in the appropriate file folder and file name. In Step S12, a file is created in the appropriate location with the appropriate file name based on the information included in the reservation file.

In Step S13, the link file is deleted from the pending folder and the document reservation file is deleted from the target folder.

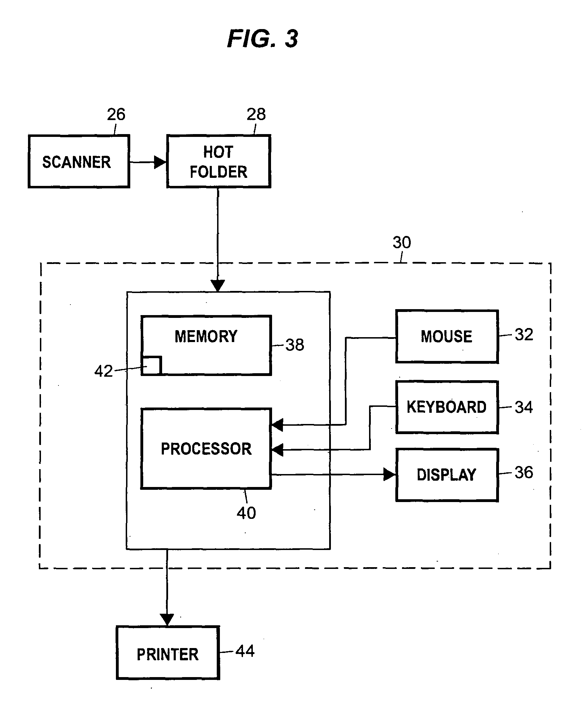

Reference is made to Figure 3 which shows a system for implementing embodiments of the present invention. The system comprises a scanning device 26. The scanning device 26 is arranged to scan documents. The scanning device sends the scanned documents to a dedicated location 28. That dedicated location can be provided in any suitable place such as on a server or specified computer in a network type environment. In the alternative, the dedicated location 28 may be provided on a PC such as PC 30.

PC 30 is arranged to have input devices in the form of a mouse 32 and a keyboard 34. The PC is provided with a display 36. The PC has a memory capacity 38. For convenience, the memory capacity 38 as shown as a single block. In practice, the memory may be divided up into different blocks and may take different formats. For example, the memory can be made up of RAM and ROM components. The memory 38, mouse 32, keyboard 34 and display 36 are all connected to a processor 40. The memory 40 is arranged to store the application for implementing embodiments of the present invention. This is illustrated diagrammatically by reference 42. The program or elements of the program defining the application are retrieved from memory by the processor 40 which causes the steps shown in Figures 1 and 2 to be carried out.

The PC 30 is also connected to a printer 44. This printer 44 is a label printer, which in one embodiment of the present invention which is able to print a barcode on the label. The label can then be applied to a document to be scanned.

In the alternative, the printer can be a normal sheet printer which prints the barcode onto a cover sheet.

In one modification, the PC may be connected to two printers one of which is a label printer and the other of which is a sheet printer. The application will allow the user to select either the sheet printer or the label printer. In yet another modification, in some embodiments of the present invention, a single printer may be able to print a barcode on a cover sheet and print a barcode on a label. In such modification, the user will select whether a label or cover sheet is to be printed.

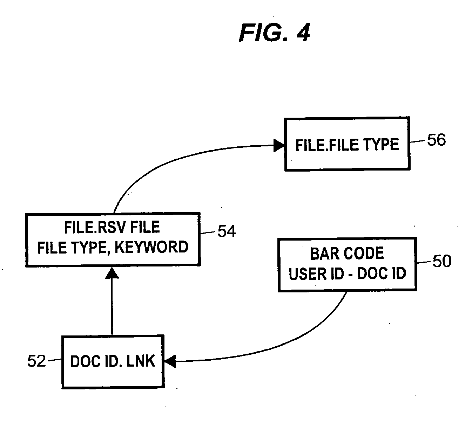

Reference is made to Figure 4 which schematically shows the relationship between the different entities created by the application. The barcode 50 comprises a user identity and a document identity. The document identity is used to identify the short cut link. This is because the document identity is used as the name of the short cut. The document identity link then provides a short cut to the reservation file. The reservation file includes information which causes a file to be provided with the correct file name and the correct file type.

In one embodiment of the invention, the reservation file is deleted when the document has successfully been stored in the same location that the reservation file has been stored in.

Embodiments of the present invention thus avoid the need to have a database.

Embodiments of the present invention have been described as using a barcode as the identifier. It should be appreciated that in alternative embodiments of the present invention, a different form of identity may be provided. For example, a number at a particular location on a document may be used to provide similar information. In the alternative, any other form of coding, analogous to a barcode could be used instead of the barcode.

With embodiments of the present invention, a user can digitally file numerous documents on their computer or a network server by attaching a barcode label or barcode cover sheet to the first page. When convenient, the user can use any scanning device and scan all of the documents, even if there are to go to different locations at the same time.

The application software bursts or separates the document based on the barcodes, looking up the filing information associated with that barcode then processes the paper document accordingly.

In one embodiment of the present invention, a limit may be provided as the total number of pages that can be scanned in a given time period. For example, a maximum of 500 pages may be scannable in a given month. As shown in Figure 5, the interface may give an indicator as to the number of pages scanned. If more than the set number of pages has been scanned, then the user will be given a message which will indicate that no more scans are possible or will give the user the procedure for increasing the number of pages to be scanned.

In one preferred embodiment of the present invention, it is possible to review all of the pending cases. In particular, effectively the list of reservation files is displayed. Thus, the user can identify those reservation files which have been created but have not yet had the associated documents scanned and stored. This allows the user to make a check to make sure that all of the documents have been scanned. This is shown in Figure 5 which shows that there are two reservation files still pending i.e. for which the scanned documents are not available. This is shown in an area 28.

In an alternative embodiment of the present invention, the short cut may alternatively be listed in area 28. However, by using the reservation documents, the document name will be clear.

Embodiments of the invention abstract the scanning process from the indexing process so the user doesn't have to constantly interact with the scanner.

Embodiments of the invention may use dedicated scanners but are also able to use standard office equipment such as digital copiers, all-in-one (multifunction) printers, etc.

While the invention has been particularly shown and described with reference to preferred embodiments thereof, it will be understood by those skilled in the art that various changes in form and details maybe made therein without departing from the spirit and scope of the invention.

## Claims

1. A document management system comprising:
a first functionality operable to cause a first file to be created;
a second functionality operable to cause an image to be printed comprising identification information;
a third functionality operable to cause a link to be created to said file, said link arranged to link the identification information to said first file.

2. A system as claimed in claim 1, wherein said identification information comprises document identification information.

3. A system as claimed in claim 1 or 2, wherein said link comprises a shortcut.

4. A system as claimed in claim 1, 2 or 3, wherein said image comprises a bar code.

5. A system as claimed in any preceding claim, wherein said identification information comprises a number.

6. A system as claimed in any preceding claim, wherein said second functionality is operable to cause said image to comprise user identification information.

7. A system as claimed in any preceding claim, wherein said first file comprises a text file.

8. A system as claimed in any preceding claim, wherein said first file comprises information identifying at least one of: a file format; and one or more keywords.

9. A system as claimed in any preceding claim, wherein said link comprises a name, said name comprising said document identification information.

10. A system as claimed in any preceding claim, comprising a fourth functionality operable to monitor a folder for scanned document.

11. A system as claimed in claim 10 wherein said fourth functionality is operable to burst a scanned document into one or more separate documents in dependence on one or more of said images.

12. A system as claimed in claim 10 or 11, wherein said second functionality is operable to cause said image to comprise user identification information and said fourth functionality is operable to check said user identification information to determine if said document is for said user.

13. A system as claimed in claim 10, 11 or 12, wherein said fourth functionality is operable to use said printed image to determine said information and use said information to identify the associated link.

14. A system as claimed in claim 13, wherein said fourth functionality is arranged to open said first file associated with said identified link.

15. A system as claimed in any of claims 10 to 14, wherein said fourth functionality is operable to cause said scanned document to be stored in accordance with format information in said first file.

16. A system as claimed in any of claims 10 to 15, wherein said fourth functionality is operable to store said scanned document in a same location as said first file with a same name.

17. A system as claimed in any of claims 10 to 16, wherein said fourth functionality is operable to delete said first file when said scanned document has been stored.

18. A system as claimed in any preceding claim, wherein said first functionality is operable to create a plurality of first files, and a fifth functionality is operable to determine those first files for which an associated document has not yet be scanned.

19. A system comprising:
document management system comprising:
a first functionality operable to cause a first file to be created;
a second functionality operable to cause an image to be printed comprising document identification information; and
a third functionality operable to cause a shortcut to be created to said file, said shortcut arranged to link the document identification information to said first file; and
a printer operable to print said image.

20. A system as claimed in claim 19, wherein said printer comprises a label printer.

21. A system as claimed in claim 19 or 20, wherein said system comprises a scanner for scanning documents.

22. A system as claimed in claim 19, 20 or 21, wherein said document management system is provided on at least one of a computer and a server.

23. A document management system comprising:
means for creating a first file;
means for causing an image to be printed, said image comprising identification information; and
means for creating a link to said file, said link arranged to link the identification information to said first file.

24. A method of document management comprising:
creating a first file;
printing an image comprising identification information; and
creating a link to said file, said link arranged to link the identification information to said first file.

25. A method as claimed in claim 24, wherein said identification information comprises document identification information.

26. A method as claimed in claim 24 or 25, wherein said link comprises a shortcut.

27. A method as claimed in claim 24, 25 or 26, wherein said image comprises a bar code.

28. A method as claimed in any of claims 24 to 27, comprising determining said information and using said information to identify the associated link.

29. A method as claimed in any of claims 24 to 28, comprising deleting said first file when an associated scanned document has been stored.

30. A method as claimed in any of claims 24 to 29, comprising creating a plurality of first files, and determining which of those first files for which an associated document has not yet be scanned.

31. A computer readable medium having computer executable components comprising:
a first functionality operable to cause a first file to be created;
a second functionality operable to cause an image to be printed comprising identification information; and
a third functionality operable to cause a link to be created to said file, said link arranged to link the identification information to said first file.
